# EUROPÄISCHE PATENTANMELDUNG

(11) **EP 4 671 084 A1**
(43) Veröffentlichungstag der Anmeldung: **31.12.2025**
(21) Anmeldenummer: 24185476.9
(22) Anmeldetag: 28.06.2024
(51) Int. Cl.: B61L 23/04, B61L 25/02

(54) **VERFAHREN ZUR GESCHWINDIGKEITSBESTIMMUNG EINES AUF EINER STRECKE FAHRENDEN SPURGEFÜHRTEN FAHRZEUGS**

(71) Anmelder: Siemens Mobility GmbH, 80997 München (DE)
(72) Erfinder: Bluszcz, Tomasz, 38106 Braunschweig (DE); Muxfeldt, Arne, 38110 Braunschweig (DE); Puchinger, Martin, 38124 Braunschweig (DE); Rahn, Karsten, 38162 Cremlingen (DE)
(74) Vertreter: Siemens Patent Attorneys

(57) **Zusammenfassung**

Folgender Gegenstand ist von der Erfindung umfasst: Ein Verfahren zur Geschwindigkeitsbestimmung eines auf einer Strecke fahrenden spurgeführten Fahrzeugs (FZ). Bei dem Verfahren wird erfindungsgemäß eine Folge von Bildern der Strecke und ihrer Umgebung durch einen bildgebenden Sensor erfasst und gespeichert und jeweilige Erfassungszeitpunkte der Bilder derart gespeichert, dass diese den jeweiligen Bildern zugeordnet sind. In den Bildern werden dann charakteristische Bildbereiche erkannt, wobei eine Anzahl von gespeicherten Bildern ausgewählt wird, um eine perspektivische Verschiebung mindestens eines charakteristischen Bildbereiches in den Bildern der ausgewählten Anzahl, die aufgrund der Bewegung des Fahrzeugs entsteht, zu ermitteln. Danach kann die perspektivische Verschiebung unter Berücksichtigung der Erfassungszeitpunkte der Bilder der ausgewählten Anzahl in eine Geschwindigkeit umgerechnet werden. Ferner ist von der Erfindung ein Fahrzeug (FZ) mit einer Einrichtung zur Geschwindigkeitsbestimmung umfasst. Vorteilhaft lässt sich eine vergleichsweise genaue relative Ortung des Fahrzeugs durchführen, wenn eine absolute Ortung des Fahrzeugs gerade nicht möglich ist.

## Beschreibung

### Technisches Gebiet

Von der Erfindung ist ein Verfahren zur Geschwindigkeitsbestimmung eines auf einer Strecke fahrenden spurgeführten Fahrzeugs umfasst. Ferner ist von der Erfindung ein Fahrzeug mit einer Einrichtung zur Geschwindigkeitsbestimmung umfasst. Ferner ist von der Erfindung ein Computerprogrammprodukt, enthaltend Programmbefehle, umfasst. Ferner ist von der Erfindung ein Computerlesbares Speichermedium, enthaltend Daten, umfasst.

### Technischer Hintergrund

Stand der Technik ist der Einsatz von vergleichsweise komplexer Odometrie auf Basis von zum Beispiel Balisen, Radaren, GPS und Odometern. Eine absolute Ortung (Absolutortung) erfolgt dabei beispielsweise durch die Balisen und/oder GPS. Eine relative Fortschreibung der Ortung (Relativortung) erfolgt beispielsweise durch Radare und Odometer, und zwar, indem ausgehend von dem letzten aufgrund einer absoluten Ortung ermittelten bekannten Ort die Geschwindigkeit des Fahrzeugs gemessen und aufgrund der gemessenen Geschwindigkeit der Ort des Fahrzeugs unter Kenntnis des Streckenverlaufes fortgeschrieben wird. Dabei kommt es zu Folgefehlereffekten. Somit ist die Ortung relativ genau, wenn eine absolute Ortung möglich ist und weitet in ihrer Unsicherheit auf, wenn die Ortung nur auf der relativen Fortschreibung basiert, wobei der Folgefehler umso größer wird, je länger die relative Ortung dauert.

Für den sicheren Betrieb von Zügen ist es auch notwendig, dass Züge ihre Position (Ort) und die gefahrene Geschwindigkeit kennen. Dieses wird unter anderem dafür benötigt, Bremskurven und Sicherheitsabstände zu bestimmen und zu überwachen. Der Ort kann mit vergleichsweise hoher Genauigkeit durch eine Ortung mit Hilfe streckenseitig verbauter Funktionskomponenten wie Balisen oder erkannter Landmarken (z. B. durch eine Objekterkennung) oder mittels Navigationssatelliten erreicht werden. Dies soll im Folgenden als absolute Ortung bezeichnet werden.

Messfehler hängen hierbei in ersten Linie von der Messgenauigkeit des Verfahrens ab und sind unabhängig von der Dauer der Messung.

Die vorgenannten Ortungsverfahren sind aber nicht dauerhaft verfügbar. Daher sind auf dem Fahrzeug Messverfahren implementiert, die ausgehend vom letzten bekannte Ort aus einem Verfahren zur absoluten Ortung und dem Geschwindigkeitsverlauf des Fahrzeugs den Ort bestimmen können. Dies soll im Folgenden auch als relative Ortung bezeichnet werden. Die Geschwindigkeitsinformation bei der relativen Ortung dafür muss möglichst genau und möglichst unabhängig von Gleitvorgängen der Räder sein, die die bekannte Odometrie (unter Einsatz von Tachometern) beeinflussen. Hierbei wird die Unsicherheit des ermittelten Ortes (auch als kumulierter Messfehler bezeichnet) mit zunehmender Dauer der Messung immer größer. Bisher wird diese Aufgabe daher in einer Odometrie-Komponente z.B. dadurch gelöst, dass Signale von Wegimpulsgeben und schlupfunabhängigen Radarsensoren verwendet werden und mit Hilfe von Sensor-Fehlermodellen zu einer sicheren Geschwindigkeit fusioniert werden. Allerdings ist diese Lösung aufwändig und daher mit hohen Kosten verbunden.

In dem Dokument US 2016/0121912 A1 ist beschrieben, dass eine Lokalisierung eines spurgeführten Fahrzeugs auch durch eine Objekterkennung von an der Strecke befindlichen Objekten erfolgen kann. Nach der Erkennung der besagten Objekte, wird deren Position, die beispielsweise in einer Datenbank gespeichert ist, als Ortsinformationen herangezogen.

In dem Dokument US 2017/0327138 A1 ist ein Verfahren beschrieben, mit dem eine Objekterkennung für spurgeführten Fahrzeuge mittels künstlicher Intelligenz (im folgenden kurz KI) trainiert werden kann, wobei ein Reinforcement Learning (im folgenden kurz RL) angewendet wird. RL ist eine Technik des Machine Learnings (ML), mit der Software trainiert wird, Entscheidungen zu treffen, um optimale Ergebnisse zu erzielen. Es ahmt den Lernprozess nach, mit dem Menschen durch Versuch und Irrtum ihre Ziele erreichen. Ist ein Erkennungsprozess einmal erlernt bzw. trainiert, kann dieser für eine Ortung des spurgeführten Fahrzeugs angewendet werden. Zu unterscheiden ist damit eine Anlernphase des Systems, in der das System noch nicht zur Verfügung steht, sowie eine Anwendungsphase des Systems, in der eine Ortung mithilfe der Objekterkennung erfolgen kann.

Gemäß dem Dokument EP 4067202 A1 ist ein Verfahren bekannt, mit dem spurgeführte Fahrzeuge in einem Fahrzeugdepot lokalisiert werden können. Dies erfolgt mittels Kameras, die definierte Ortsmarker im Depot in Bildern erkennen, deren Position bekannt ist. Dies lässt sich in einem Depot besonders einfach durchführen, da sich dieses üblicherweise in einem nach außen abgeschlossenen Bereich befindet, weswegen eine Einflussnahme auf die Ortsmarker (zum Beispiel durch Fremdeinwirkung wie Vandalismus) sehr gering ist und das Verfahren daher zuverlässig angewendet werden kann.

Aus dem erläuterten Stand der Technik ergibt sich das Problem, dass Verfahren zur Geschwindigkeitsermittlung auch bei relativer Ortung einen möglichst geringen kumulativen Fehler erzeugen sollen und die Implementierung des Verfahrens möglichst kostengünstig sein soll.

### Zusammenfassung der Erfindung

Die Aufgabe der Erfindung besteht darin, die beschriebenen Probleme im Stand der Technik zu beheben. Insbesondere ist es Aufgabe, dass ein kostengünstiges Verfahren zur Geschwindigkeitsbestimmung für ein spurgeführtes Fahrzeug anzugeben, welches auch bei längeren Betriebszeiten mit einer möglichst hohen Messgenauigkeit ablaufen kann und hierbei die im Zugverkehr geltenden hohen Sicherheitsanforderungen dauerhaft erfüllen kann. Weiterhin ist es Aufgabe der Erfindung, ein Fahrzeug, ein Computerprogrammprodukt und ein computerlesbares Speichermedium anzugeben, mit dem das verbesserte Verfahren durchführbar ist.

Beschrieben wird gemäß einem ersten Aspekt der Erfindung ein Verfahren zur Geschwindigkeitsbestimmung eines auf einer Strecke fahrenden spurgeführten Fahrzeugs bei dem
a) eine Folge von Bildern der Strecke und ihrer Umgebung durch einen bildgebenden Sensor erfasst und gespeichert wird,
b) jeweilige Erfassungszeitpunkte der Bilder derart gespeichert werden, dass diese den jeweiligen Bildern zugeordnet sind,
c) in den Bildern charakteristische Bildbereiche erkannt werden.

Ist im Rahmen dieser Erfindungsbeschreibung von bildgebenden Sensoren die Rede, dann ist das Messergebnis des Sensors bzw. eine Verarbeitung dieses Messergebnisses durch eine Datenverarbeitung eine Bildinformation. Diese Bildinformation stellt das Messergebnis zweidimensional auf einer Bildfläche dar. Dabei kann die Bildinformationen digital, vorzugsweise als Matrix von Bildpunkten, oder analog aufgebaut sein.

Charakteristische Bildbereiche sind Bildbereiche, die auch in einer Folge von Bildern, die sich auf Grund der Bewegung des Fahrzeugs quasikontinuierlich (also schrittweise) verändern, wiederholt erkannt werden können. Charakteristische Bildbereiche können beispielsweise durch abrupte Kontrast- oder Farbwechsel gekennzeichnet sein und in an sich bekannter Weise rechnergestützt in den Bildern erkannt werden. Dabei ist es nicht erforderlich, in den Bildern bestimmte Objekte zu erkennen - eine Objekterkennung kann jedoch fakultativ durchgeführt werden. Die erkannten Objekte begrenzen in diesem Fall die charakteristischen Bildbereiche.

Rechnergestützt oder computerimplementiert ist eine Vorrichtung, wenn diese eine Rechenumgebung aufweist, oder ein Verfahren, wenn eine Rechenumgebung mindestens einen Verfahrensschritt des Verfahrens ausführt.

Eine Rechenumgebung ist eine IT-Infrastruktur, bestehend aus Funktionskomponenten wie Prozessoren, Speichereinheiten, Programmen und aus mit den Programmen zu verarbeitenden Daten, die zur Ausführung mindestens einer Applikation, die eine Aufgabe zu erfüllen hat, verwendet werden. Weitere Funktionskomponenten können aus Sensoren und Aktuatoren bestehen, welche eine Interaktion der Rechenumgebung mit der Außenwelt ermöglichen. Die IT-Infrastruktur kann auch als Netzwerk der genannten Funktionskomponenten organisiert sein.

Eine Cloud (auch als Rechnerwolke oder Datenwolke bezeichnet) ist eine Rechenumgebung für ein sog. Cloud-Computing. Gemeint ist eine IT-Infrastruktur, welche über Schnittstellen eines Netzwerks wie dem Internet verfügbar gemacht wird. Sie beinhaltet in der Regel Speicherplatz, Rechenleistung oder Software als Dienstleistung, ohne dass diese auf einer die Cloud nutzenden Recheninstanz installiert sein müssen. Die im Rahmen des Cloud-Computings angebotenen Dienstleistungen umfassen das gesamte Spektrum der Informationstechnik und beinhalten unter anderem die IT-Infrastruktur, Plattformen, Software und Rechenleistung, wobei der Cloud-Anbieter die angebotenen Ressourcen bedarfsgerecht an die Cloud-Nutzer verteilt, mit dem Ziel, die Ressourcen damit optimal auszuschöpfen.

Da in der Bahntechnik hohe Sicherheitsstandards hinsichtlich Funktion (Betriebssicherheit, Safety) sowie Angreifbarkeit (Übertragungssicherheit, Security) computerimplementierter Lösungen gelten, sind die Funktionalitäten einer Cloud, die in der Bahntechnik zum Einsatz kommt, hinsichtlich ihrer geteilten Verfügbarkeit üblicherweise begrenzt. Insbesondere, was den Zugriff eines potenziell unbegrenzten Kreises von Cloud-Nutzern angeht, sind daher Restriktionen erforderlich. Aber auch, was die Teilung von Rechenressourcen durch verschiedene Recheninstanzen angeht, muss mit Blick auf eine erforderliche Redundanz ein Zugriff begrenzt werden. Eine Technologie, die diese Restriktionen für die Bahntechnik berücksichtigt, wird im Zusammenhang mit dieser Erfindung auch als private Cloud bezeichnet, auch wenn eine private Cloud die mit Cloudtechnologie verbundenen technischen Merkmale nur eingeschränkt erfüllt.

Recheninstanzen bilden innerhalb einer Rechenumgebung funktionale Einheiten aus, die Applikationen (gegeben beispielsweise durch eine Anzahl von Programmmodulen) zugeordnet werden können und diese ausführen können. Diese funktionalen Einheiten bilden bei der Ausführung der Applikation physikalisch (beispielsweise Computer, Prozessor) und/oder virtuell (beispielsweise Programmmodul) in sich geschlossenes Systeme.

Computer sind aus mehreren Funktionskomponenten bestehende elektronische Geräte mit Datenverarbeitungseigenschaften. Computer können beispielsweise Clients, Server, Handheld-Computer, Kommunikationsgeräte und andere elektronische Geräte zur Datenverarbeitung sein, die Prozessoren und Speichereinheiten aufweisen können und über Schnittstellen auch zu einem Netzwerk zusammengeschlossen sein können.

Prozessoren können beispielsweise Wandler, Sensoren zur Erzeugung von Messsignalen oder elektronische Schaltungen sein. Bei einem Prozessor kann es sich um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen und Daten handeln. Auch kann unter einem Prozessor ein virtualisierter Prozessor oder eine Soft-CPU verstanden werden.

Speichereinheiten können auf computerlesbaren Speichern in Form von Arbeitsspeichern (engl. Random-Access Memory, RAM) oder Datenspeichern (Festplatte oder Datenträger) ausgeführt sein.

Programmmodule sind einzelne Software-Funktionseinheiten, die einen erfindungsgemäßen Programmablauf von Verfahrensschritten ermöglichen. Diese Software-Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Schnittstellen können hardwaretechnisch, beispielsweise kabelgebunden oder als Funkverbindung, oder softwaretechnisch, beispielsweise als Interaktion zwischen einzelnen Programmmodulen eines oder mehrerer Computerprogramme, realisiert sein und dienen einem Austausch von Daten vorzugsweise in Form von digitalen Datensätzen oder analogen Signalen.

Zur Vermeidung von Missverständnissen sei an dieser Stelle angemerkt, dass einzelne Anspruchsmerkmale mit kleinen lateinischen Buchstaben durchnummeriert werden, ohne dass dabei Rücksicht auf die Anspruchsnummerierung genommen wird. Dies bedeutet, dass jeder Buchstabe im gesamten Anspruchssatz nur einmal vorkommt, was eine eindeutige Adressierung der betreffenden Anspruchsmerkmale ohne Nennung der Anspruchsnummer ermöglicht. Deswegen kommt der Reihenfolge der Buchstaben jedoch keine Bedeutung zu.

Erfindungsgemäß ist vorgesehen, dass
d) eine Anzahl von gespeicherten Bildern ausgewählt wird,
e) eine perspektivische Verschiebung mindestens eines charakteristischen Bildbereiches in den Bildern der ausgewählten Anzahl, die aufgrund der Bewegung des Fahrzeugs entsteht, ermittelt wird,
f) die perspektivische Verschiebung unter Berücksichtigung der Erfassungszeitpunkte der Bilder der ausgewählten Anzahl in eine Geschwindigkeit umgerechnet wird.

Die Erfindung löst das Problem, indem die Geschwindigkeitsinformation aus der zeitlichen Folge von aufgenommenen Bildern abgeleitet wird. Dies soll im Folgenden beispielhaft erklärt werden. Entsprechend der Erfindung sind mindestens zwei Bilder im bekannten zeitlichen Abstand aufzunehmen. Diese Bilder müssen mindestens teilweise den gleichen Bildinhalt zeigen und werden von dem gleichen bildgebenden Sensor, der vorzugsweise in Fahrtrichtung ausgerichtet ist, aufgenommen.

Mittels Algorithmen wie Harris Corner, SIFT (Scale Invariant Feature Transform), SURF (Speeded Up Robust Feature), FAST (Features from Accelerated Segment Test) oder ORB (Oriented FAST and Rotated BRIEF), die an Sich bekannt sind, lassen sich charakteristische Bildbereiche, auch Feature-Punkte genannt, in den Bildern bestimmen, die vorzugsweise invariant zum Beispiel gegen unterschiedliche Beleuchtung sind.

Ist ein Ort bekannt, an dem sich das Fahrzeug zuletzt befunden hat und auch der Zeitpunkt bekannt, zu dem sich das Fahrzeug an diesem Ort befunden hat, so kann im Rahmen der relativen Ortung der zeitliche Verlauf der Geschwindigkeit genutzt werden, um den aktuellen Ort des Fahrzeugs zu bestimmen. Insbesondere erfolgt diese Bestimmung auf der Strecke (dies ist eine mit Bezug auf den Streckenverlauf, dargestellt beispielsweise in einem vorzugsweise digitalen Streckenatlas, eindimensionale Ortung). Wenn der Verlauf der Strecke in einer zweidimensionalen Karte bekannt ist, so kann der Ort auf der Strecke gleichzeitig zur Bestimmung des Ortes in dieser zweidimensionalen vorzugswese digitalen Karte herangezogen werden. Das Ortungsverfahren selbst ist unter Anwendung von odometrischen Verfahren (beispielsweise Tachometer) an sich bereits bekannt. Allerdings weist dies unter Verwendung des erfindungsgemäßen Verfahrens vorteilhaft eine höhere Genauigkeit auf. Dabei sind beispielsweise Kameras als bildgebende Sensoren kostengünstig in Anschaffung und Betrieb, was vorteilhaft die Wirtschaftlichkeit des Verfahrens erhöht.

Die Ausrichtung in Fahrtrichtung ermöglicht es, die perspektivische Veränderung von Featurepunkten zu verfolgen, welchen sich das Fahrzeug annähert, sodass diese sich vergrößern und zum seitlichen Bildrand wandern. Sobald ein Featurepunkt erkannt wird, vereinfacht sich dessen Verfolgung vorteilhaft dadurch, dass der Featurepunkt in dem Bild immer größer wird. Vorteilhaft ist auch, dass, je näher der Featurepunkt an der Kamera ist, dieser umso besser aufgelöst ist und genauer berechnet werden kann. Dadurch verbessert sich die Qualität mit der er die Zugbewegung beschreibt. Selbstverständlich funktioniert auch eine Ausrichtung des bildgebenden Sensors entgegen der Fahrtrichtung, also am Ende des Fahrzeugs, wobei das Verfahren dann genau andersrum abläuft (Featurepunkte wandern zur Bildmitte und verkleinern sich dabei).

Die Erfindung beschreibt mit anderen Worten ein Verfahren zur Ermittlung der Geschwindigkeit auf Basis einer zeitlichen Folge von Kamerabildern und Auswertung von Featurepunkten. Aufgrund des optischen Messverfahrens ist die ermittelte Geschwindigkeit unabhängig von Gleit- oder Schleudervorgängen im Rad-Schiene-Kontakt und aufgrund dieser Eigenschaft sehr wertvoll für eine Odometrie. Ein Vorteil ist, dass die Featurepunkte von einem Algorithmus ausgewählt werden. Es ist nicht notwendig, dass dafür Objekte erkannt und im Bild verfolgt werden. Somit ist das Verfahren ohne eine streckenspezifisches Training oder eine Anpassung an verschiedene Umgebungen mit unterschiedlichen optischen Merkmalen einsetzbar.

Beschrieben wird gemäß einem weiteren Aspekt der Erfindung ein Fahrzeug mit einer Einrichtung zur Geschwindigkeitsbestimmung aufweisend einen Sensor und eine Recheninstanz. Gemäß diesem Aspekt ist erfindungsgemäß vorgesehen, dass
g) der Sensor als bildgebender Sensor ausgestaltet ist und eingerichtet ist, zumindest den Verfahrensschritt a) gemäß einem der voranstehenden Ansprüche durchzuführen,
h) die mindestens eine Recheninstanz Teil einer Rechenumgebung ist, wobei die Rechenumgebung eingerichtet ist, zumindest die Verfahrensschritte b), c), d), e), und f) gemäß einem der voranstehenden Ansprüche durchzuführen. Die mit diesem Aspekt der Erfindung verbundenen Vorteile sind vorstehend bereits erläutert worden, wobei auf diese Vorteile verwiesen wird.

Beschrieben wird gemäß einem weiteren Aspekt der Erfindung ein Computerprogrammprodukt, enthaltend Programmbefehle, die durch eine Rechenumgebung ausführbar sind. Gemäß diesem Aspekt ist erfindungsgemäß vorgesehen, dass zumindest die Schritte b), c), d), e), und f) des Verfahrens nach einem der Ansprüche 1 - 9 ausgeführt wird.

Gemäß der Erfindung wird somit ein Programmmodule enthaltendes Computerprogrammprodukt mit Programmbefehlen beschrieben, wobei die Programmmodule in derselben Recheninstanz oder mehreren Recheninstanzen der Rechenumgebung laufen können. Mittels des Computerprogrammproduktes, das ein Computerprogramm oder mehrere Computerprogramme umfassen kann, sind jeweils das erfindungsgemäße Verfahren und/oder dessen Ausführungsbeispiele ausführbar und mit der Ausführung werden die vorstehend beschriebenen Vorteile erreicht.

Beschrieben wird gemäß einem weiteren Aspekt der Erfindung ein computerlesbares Speichermedium, enthaltend Daten, welche als Datensätze vom Speichermedium gespeichert werden. Gemäß diesem Aspekt ist erfindungsgemäß vorgesehen, dass die Datensätze das vorstehend beschriebene Computerprogrammprodukt nach dem letzten voranstehenden Anspruch ausführbar machen.

Darüber hinaus wird somit eine Bereitstellungsvorrichtung zum Speichern und/oder Bereitstellen des Computerprogramms in Form eines computerlesbaren Speichermediums beschrieben. Die Bereitstellungsvorrichtung ist beispielsweise eine Speichereinheit, die das Computerprogramm speichert und zum Abruf bereitstellt. Alternativ oder zusätzlich ist die Bereitstellungsvorrichtung ein Netzwerkdienst, ein Computersystem, ein Serversystem, insbesondere ein verteiltes, beispielsweise cloudbasiertes Computersystem oder virtuelles Rechnersystem, welches das Computerprogramm auf einem computerlesbaren Speichermedium speichert und vorzugsweise in Form eines Datenstroms bereitstellt.

Die Bereitstellung erfolgt in Form von Programmmodule beschreibenden Programmdatensätzen als Datei, insbesondere als Downloaddatei, oder als Datenstrom, insbesondere als Downloaddatenstrom, des Computerprogrammproduktes. Das Computerprogrammprodukt wird beispielsweise unter Verwendung der Bereitstellungsvorrichtung in eine Rechenumgebung übertragen, sodass das erfindungsgemäße Verfahren in einer Recheninstanz oder mehreren Recheninstanzen dieser Rechenumgebung zur Ausführung gebracht werden kann.

### Ausgestaltungen der Erfindung

Weiterbildungen der Erfindung beschreibende Varianten werden nachfolgend ohne Beschränkung des grundlegenden Gedankens der Erfindung erläutert.

Gemäß einer Variante sind die oben erklärten Aspekte der Erfindung dadurch bestimmt, dass das Fahrzeug unter Berücksichtigung der Geschwindigkeit ausgehend von einem zu einem bekannten Zeitpunkt bekannten Ort des Fahrzeugs relativ geortet wird.

Das erfindungsgemäße Ortungsverfahren ist ein relatives Ortungsverfahren, da die Featurepunkte zwar durch eine Auswertung der Bilder erkannt werden, jedoch nicht mit einem bestimmten Ort an der Strecke verknüpft sind. der zu einem bekannten Zeitpunkt bekannte Ort ist vorzugsweise durch ein absolutes Ortungsverfahren ermittelt worden. Dies hat den Vorteil, dass die Messgenauigkeit für den Ausgangspunkt des relativen Ordnungsverfahrens damit vergleichsweise genau ist. Für die Genauigkeit der relativen Ortung gilt das oben erwähnte gleichermaßen, dass die relative Ortung im Vergleich zu bekannten und biometrischen Verfahren vergleichsweise genau ist und der kumulierte Fehler damit klein gehalten werden kann.

Gemäß einer Variante sind die oben erklärten Aspekte der Erfindung dadurch bestimmt, dass der Sensor mit einer Erfassungrichtung zumindest im Wesentlichen in Fahrtrichtung ausgerichtet ist.

Eine Ausrichtung in Fahrtrichtung kann so beschrieben werden, dass eine Erfassungsrichtung (beispielsweise der optischen Achse eines Objektivs eines Bildsensors, auch Bildachse genannt) des bildgebenden Sensors im Wesentlichen in Fahrtrichtung ausgerichtet ist. Eine Ausrichtung im Wesentlichen in Fahrtrichtung bedeutet, dass ein Winkel zwischen der Bildachse und der Fahrtrichtung nicht null sein muss. Ein Winkel von bis zu 5°, vorzugsweise bis zu 2° zwischen der Erfassungsrichtung und der Fahrtrichtung ist ebenfalls möglich, ohne dass die Funktionsweise des Verfahrens beeinträchtigt wird. Vorteilhaft wird die Messung der Geschwindigkeit umso genauer, je kleiner der Winkel ist. Ein Winkel von bis zu 5° kann jedoch hingenommen werden, ohne dass der Messfehler zu groß wird. Ein weiterer Vorteil ist, dass so bewusst Störungen durch sich im Bildbereich bewegende Objekte herausgefiltert werden können, wenn diese Objekte sich nicht gerade entlang des Gleises bewegen.

Gemäß einer Variante sind die oben erklärten Aspekte der Erfindung dadurch bestimmt, dass eine Auswahl eines charakteristischen Bildbereichs auf einen in den Bildern in einem jeweiligen Bildausschnitt dargestellten Gleisbereich beschränkt wird.

Unter dem Gleisbereich im Sinne der Erfindung ist die Gleisanlage selbst, bestehend aus dem Oberbau (umfassend die Schienen, die Schwellen und Befestigungsmittel für die Schienen auf den Schwellen) und dem Unterbau (umfassend die Schüttung oder eine andere Unterlage), sowie ortsfesten Elementen der Strecke an der Gleisanlage (Streckenelemente wie Balisen, Weichen, Signale, Oberleitungen usw.) zu verstehen. Durch die Beschränkungen auf einen Bildausschnitt zur Bestimmung von Featurepunkten und der Filterung der Featurepunkte, wird die Qualität der erfindungsgemäßen Geschwindigkeitsbestimmung verbessert und die Geschwindigkeitsermittlung robuster und genauer.

Entsprechend dieser Ausgestaltung der Erfindung ist der Bereich, in dem Featurepunkte bestimmt werden, bei Ausrichtung des Sensors in Fahrtrichtung auf den Gleisbereich vor dem Zug beschränkt. Hierdurch wird so weit wie möglich ausgeschlossen, dass sich andere sich bewegende Objekte wie andere Züge oder Personen im Haltestellenbereich im relevanten Bildausschnitt befinden, da angenommen wird, dass der Bereich vor dem fahrenden Zug vom signaltechnischen System der bahntechnischen Anlage gesichert und somit frei von Objekten ist. Andere bewegte Objekte würden zu falschen Geschwindigkeiten führen, da das Ergebnis die Differenzgeschwindigkeit des bewegten Objektes und des Zuges ist. Neben dem Ausschluss von Bereichen, in denen mit bewegten Objekten zu rechnen ist, hat die Beschränkung auf einen Bildbereich auch den Vorteil, dass die zu verarbeitende Bilddatenmenge reduziert wird und somit die Rechengeschwindigkeit des Verfahrens höher ist.

Gemäß einer Variante sind die oben erklärten Aspekte der Erfindung dadurch bestimmt, dass zur Bestimmung des Bildausschnitts eine Objekterkennung für Elemente des Gleisbereiches durchgeführt wird.

Eine Objekterkennung muss in an sich bekannter Weise trainiert werden. Hierfür kann insbesondere rechnergestützt künstliche Intelligenz zum Einsatz kommen. Unter künstlicher Intelligenz (im Folgenden auch mit KI abgekürzt), auch Artificial Intelligence genannt, ist im Rahmen dieser Erfindung im engeren Sinne die Fähigkeit eines rechnergestützten maschinellen Lernens, auch Machine Learning genannt, (im Folgenden auch mit ML abgekürzt) zu verstehen. Es geht dabei um das statistische Lernen der Parametrisierung von Algorithmen, vorzugsweise für sehr komplexe Anwendungsfälle. Mittels ML erkennt und erlernt das System anhand von zuvor eingegebenen Lerndaten Muster und Gesetzmäßigkeiten bei den erfassten Prozessdaten. Mithilfe geeigneter Algorithmen können durch ML eigenständig Lösungen zu aufkommenden Problemstellungen gefunden werden. ML gliedert sich in drei Felder - überwachtes Lernen, unüberwachtes Lernen und bestärkendes Lernen (Reinforcement Learning), mit spezifischeren Anwendungen, zum Beispiel Regression und Klassifikation, Strukturerkennung und -vorhersage, Datengenerierung (Sampling) oder autonomes Handeln.

Beim überwachten Lernen wird das System durch den Zusammenhang von Eingabe und zugehöriger Ausgabe bekannter Daten trainiert und erlernt auf diese Weise approximativ funktionale Zusammenhänge. Dabei kommt es auf die Verfügbarkeit geeigneter und ausreichender Daten an, denn wenn das System mit ungeeigneten (z.B. nicht-repräsentativen) Daten trainiert wird, so lernt es fehlerhafte funktionale Zusammenhänge. Beim unüberwachten Lernen wird das System ebenfalls mit Beispieldaten trainiert, jedoch nur mit Eingabedaten und ohne Zusammenhang zu einer bekannten Ausgabe. Es lernt, wie Datengruppen zu bilden und zu erweitern sind, was typisch für den betreffenden Anwendungsfall ist und wo Abweichungen bzw. Anomalien auftreten. Dadurch lassen sich Anwendungsfälle beschreiben und Fehlerzustände entdecken. Beim bestärkenden Lernen lernt das System durch Versuch und Irrtum, indem es zu gegebenen Problemstellungen Lösungen vorschlägt und über eine Feedbackfunktion eine positive oder negative Bewertung zu diesem Vorschlag erhält. Je nach Belohnungsmechanismus erlernt das Kl-System, entsprechende Funktionen auszuführen.

Eine Objekterkennung führt vorteilhaft dazu, dass der Bildausschnitt entsprechend der vorhandenen erkannten Bildelemente jeweils an die Gegebenheiten der Strecke angepasst werden kann. Alternativ kann auch eine einfachere Lösung umgesetzt werden, dergemäß ein fester Bildausschnitt definiert wird. Geeignet ist beispielsweise ein dreiecksförmiger Bildbereich, der auf den unteren Bildrand fußt wobei dessen Spitze im Fluchtpunkt oder genau in der Mitte des Bildes liegt.

Gemäß einer Variante sind die oben erklärten Aspekte der Erfindung dadurch bestimmt, dass zur Beurteilung der perspektivischen Verschiebung Verschiebungsvektoren des charakteristischen Bildbereiches in jeweils aufeinanderfolgenden Bildern bestimmt werden.

Nachdem in allen ausgewerteten Bildern die Feature-Punkte bestimmt wurden, besteht die Aufgabe, diese miteinander zu vergleichen, um eine Zuordnung der Feature-Punkte aus Bild A mit denen aus Bild B usw. zu erreichen. Diese Aufgabe kann zum Beispiel mit dem Algorithmus FLANN (Fast Library of Approximate Nearest Neighbors) gelöst werden. Somit entstehen jeweils Punktpaare, die ein Punkt im Bild A einem anderen Punkt in Bild B usw. zuordnen. Entsprechend der Erfindung ist als nächstes der Verschiebungsvektor zwischen den beiden Punkten eines jeden Punktpaars zu bestimmen.

Die Größe des Verschiebungsvektors ist ein Maß für die Geschwindigkeit, welche mit Hilfe des bekannten Zeitabstands zwischen den Bildern bestimmt werden kann. Hat der Verschiebungsvektor den Betrag 0, so ist daraus zu schließen, dass die Kamera sich zwischen den Aufnahmezeitpunkten der Bilder nicht relativ zum Feature-Punkt bewegt hat (das Fahrzeug also steht). Bewegt sich das Fahrzeug, so weisen die Bewegungsvektoren einen Wert ungleich Null auf. Dasselbe gilt auch für einen Bildachsenvektor, der sich genau in Blickrichtung des bildgebenden Sensors erstreckt (hierzu im Folgenden noch mehr).

Gemäß einer Variante sind die oben erklärten Aspekte der Erfindung dadurch bestimmt, dass die Eignung der Verschiebungsvektoren zur Geschwindigkeitsermittlung überprüft wird, indem das Skalarprodukt aus dem betreffenden Verschiebungsvektor und einem Bildachsenvektor berechnet wird.

Der Begriff Bildachse wird in einem technischen Sinne im Zusammenhang mit der Zentralprojektion in den erzeugten Bildern verwendet. Gemeint ist damit die Gerade, die senkrecht auf der Bildebene steht und gleichzeitig durch das projizierende Objektiv geht. Der Bildachsenvektor entsteht dadurch, dass dieser in den beiden aufeinanderfolgenden Bildern in gleicher Weise bestimmt wird, wie der Verschiebungsvektor und somit von der Geschwindigkeit des Fahrzeugs abhängig ist. Das Skalarprodukt stellt vorteilhaft ein Maß für die Eignung des ermittelten Bewegungsvektors zur Geschwindigkeitsbestimmung dar. Je größer das Skalarprodukt ist, desto besser ist der zugehörige Bewegungsvektor zur Geschwindigkeitsermittlung geeignet.

Gemäß einer Variante sind die oben erklärten Aspekte der Erfindung dadurch bestimmt, dass der Verschiebungsvektor und der Bildachsenvektor normiert werden, bevor das Skalarprodukt berechnet wird.

Anschließend kann somit das Skalarprodukt zwischen dem normierten Verschiebungsvektor und dem normierten Bildachsenvektor des Sensors, welcher die Bilder aufgenommen hat, bestimmt werden. Die Vektoren sind vor der Bildung des Skalarproduktes zu normieren, wenn das Ergebnis vorteilhaft invariant bezüglich der gefahrenen Geschwindigkeit sein soll. Das Skalarprodukt beschreibt den Winkel zwischen dem Verschiebungsvektor und der Blickachse. Somit ist es auch invariant gegen die Bewegungsrichtung des Zuges.

Gemäß einer Variante sind die oben erklärten Aspekte der Erfindung dadurch bestimmt, dass ein Verschiebungsvektor nur dann für eine Geschwindigkeitsbestimmung verwendet wird, wenn eine rechnergestützte Prüfung ergibt, dass das Skalarprodukt oberhalb eines vorgegebenen Schwellenwertes oder mindestens auf dem vorgegebenen Schwellenwert liegt.

Ein Vorteil dieser Variante besteht darin, dass wegen der Normierung des Verschiebungsvektors und des Bildachsenvektors das Skalarprodukt geschwindigkeitsunabhängig immer zwischen Null und Eins liegt. Daher kann ein Schwellwert definiert werden, der unabhängig von der Geschwindigkeit beurteilt werden kann. Ohne eine Normierung muss der Schwellwert geschwindigkeitsabhängig vorgegeben werden.

Liegt das Skalarprodukt über dem konfigurierten Schwellwert, ist sichergestellt, dass das Punktepaar zur Geschwindigkeitsbestimmung in im Wesentlichen Blickrichtung der Kamera und damit in Fahrtrichtung liegt. Der ermittelte Geschwindigkeitswert ist gültig. Liegt das Skalarprodukt unter einem konfigurierten Schwellwert, so muss das Punktpaar verworfen werden, da die Bewegung der Punkte nicht genügend in Blickrichtung der Kamera erfolgt und sich damit nicht mit der Fahrtrichtung deckt. Es ist davon auszugehen, dass die Punkte auf einem Objekt liegen dessen Hauptbewegungsrichtung, also nicht parallel zu den Schienen erfolgt.

Durch die Schienenführung des Zuges sind nur Bewegungen entlang der Blickrichtung möglich und nur diese Anteile sind relevant und sollen zur Geschwindigkeitsbestimmung verwendet werden. Effekte wie Kurvenradien oder Punktpaare, welche seitliche Bewegungen beschreiben (z.B. durch Fehler im FLANN Algorithmus oder dadurch, dass kleine Objekte im Gleis wie Blätter oder Müll sich bewegen), sind auch im konfigurierten Schwellwert berücksichtigt.

Mit Hilfe des vorgeschlagenen Prüfalgorithmus können in jedem Messzyklus Verfälschungen der Geschwindigkeitsmesswerte durch Bewegungen im Bild (die nicht in Blickrichtung erfolgen) erkannt werden. Hierdurch steigt die Qualität der Geschwindigkeitsmessung weiter an, denn bewegte Objekte in den Bildern, können durch die Filterung erkannt und ausgeschlossen werden, wenn deren Bewegung nicht entlang der Gleise, sondern mindestens in einem konfigurierbaren Winkel zu den Gleisen stattfindet. Die Erfindung zeichnet sich dadurch aus, dass die Filterung unabhängig von der Fahrtrichtung als auch der gefahrenen Geschwindigkeit ist.

### Exemplarische Ausführungsbeispiele der Zeichnung

Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Varianten der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch mit den vorstehend beschriebenen Varianten der Erfindung kombinierbar.

Figur 1 zeigt ein Ausführungsbeispiel der erfindungsgemäßen Vorrichtung (spurgeführtes Fahrzeug auf einer Strecke) mit ihren Wirkzusammenhängen zwischen den zum Einsatz kommenden Funktionskomponenten schematisch.

Figur 2 zeigt ein Ausführungsbeispiel einer Rechenumgebung für die Vorrichtung gemäß Figur 1 als Blockschaltbild der einzelnen Funktionskomponenten und der zwischen diesen ausgebildeten Schnittstellen, wobei einzelne Recheninstanzen Programmmodule ausführen, die jeweils in einem oder mehreren der beispielhaft dargestellten Computer ablaufen können und wobei die gezeigten Schnittstellen demgemäß softwaretechnisch in einem Computer oder hardwaretechnisch zwischen verschiedenen Computern ausgeführt sein können.

Figur 3 und Figur 4 zeigen beispielhaft Bilder, die nach dem erfindungsgemäßen Verfahren mit dem bildgebenden Sensor aufgenommen worden sind. In dieser ist eine Strecke mit einem Gleis sowie Objekte bzw. charakteristische Bildbereiche in der Nähe der Strecke zu erkennen.

Figur 5 zeigt ein Ausführungsbeispiel des erfindungsgemäßen Verfahrens als Flussdiagramm, wobei die gezeigten Verfahrensschritte einzeln oder in Gruppen durch Programmmodule verwirklicht sein können und wobei die Recheninstanzen und Schnittstellen gemäß Figur 2 beispielhaft angedeutet sind.

### Detaillierte Beschreibung der Ausführungsbeispiele

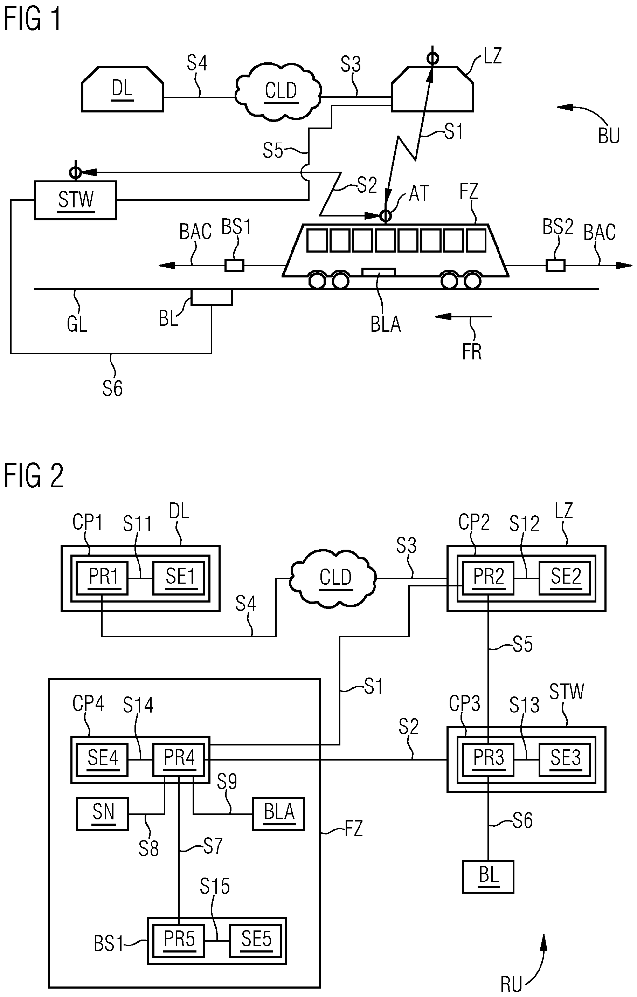

In Figur 1 ist eine Bahnumgebung BU zu sehen, in der das erfindungsgemäße Verfahren abläuft. Dabei kommt eine in Figur 2 dargestellte Rechenumgebung RU zum Einsatz. In Figur 1 ist ein spurgeführtes Fahrzeug FZ dargestellt, welches in einer Fahrtrichtung FR auf einem Gleis GL unterwegs ist. An der durch das Gleis GL gebildeten Strecke ist ein Stellwerk STW vorgesehen, welches Funktionskomponenten der Bahnumgebung BU wie beispielsweise eine Balise BL (im Falle einer Transparentdatenbalise) ansteuert. Diese kann mittels einer Balisenantenne BLA des Fahrzeugs FZ ausgelesen werden. Außerdem weist das Fahrzeug FZ einen ersten Bildsensor BS1 und einen zweiten Bildsensor BS2 auf, wobei der eine mit seiner Bildachse BAC in Fahrtrichtung FR und der andere mit seiner Bildachse BAC entgegen der Fahrtrichtung FR ausgerichtet ist.

Außerdem ist eine Leitzentrale LZ vorgesehen, in der beispielsweise die Einhaltung eines Fahrplans von in der Bahnumgebung BU eingesetzten Fahrzeugen FZ überwacht werden kann. Das Stellwerk STW, die Leitzentrale LZ und das Fahrzeug FZ sind mit Antennen AT ausgestattet, wodurch eine funkbasierte Kommunikation zwischen den genannten Einheiten möglich wird. Zusätzlich ist eine private Cloud CLD vorgesehen, über die Daten ausgetauscht werden können, zum Beispiel mit einem Dienstleister DL der Künstliche Intelligenz in Form von Rechenleistungen anbietet.

Die Rechenumgebung RU, in der das erfindungsgemäße Verfahren abläuft, kann einer gemeinsamen Betrachtung von Figur 1 und Figur 2 entnommen werden. Die zum Einsatz kommenden Recheninstanzen und Funktionskomponenten interagieren durch Schnittstellen miteinander. Durch eine erste Schnittstelle S1 sind das spurgeführte Fahrzeug FZ und die Leitzentrale LZ miteinander verbunden. Durch eine zweite Schnittstelle S2 sind das Fahrzeug FZ und das Stellwerk STW miteinander verbunden. Durch eine dritte Schnittstelle S3 sind die Leitzentrale LZ und die Cloud CLD miteinander verbunden. Durch eine vierte Schnittstelle S4 sind die Cloud CLD und der Dienstleister DL miteinander verbunden. Durch eine fünfte Schnittstelle S5 sind die Leitzentrale LZ und das Stellwerk STW miteinander verbunden. Durch eine sechste Schnittstelle S6 sind das Stellwerk STW und die Balise BL miteinander verbunden.

Gemäß Figur 2 sind die jeweils Recheninstanzen bildenden Computer näher dargestellt. Bei einem ersten Computer CP1 bei dem Dienstleister DL ist ein erster Prozessor PR1 mit einer ersten Speichereinheit SE1 durch eine elfte Schnittstelle S11 verbunden. Bei einem zweiten Computer CP2 in der Leitzentrale LZ ist ein zweiter Prozessor PR2 mit einer zweiten Speichereinheit SE2 durch eine zwölfte Schnittstelle S12 verbunden. Bei einem dritten Computer in CP3 in dem Stellwerk STW ist ein dritter Prozessor PR3 mit einer dritten Speichereinheit SE3 durch eine 13. Schnittstelle S13 verbunden. Bei einem vierten Computer CP4 im Fahrzeug FZ ist ein vierter Prozessor PR4 mit einer vierten Speichereinheit SE4 durch eine 14. Schnittstelle S14 verbunden. Bei dem ersten Bildsensor BS1 ist ein fünfter Prozessor PR5 mit einer fünften Speichereinheit SE5 durch eine 15. Schnittstelle S15 verbunden. Durch eine siebente Schnittstelle S7 sind der vierte Prozessor PR4 und der fünfte Prozessor PR5 miteinander verbunden. Durch eine achte Schnittstelle S8 sind der vierte Prozessor PR4 des ersten Bildsensors BS1 und ein Sensor SN miteinander verbunden (auch wenn der zweite Bildsensor BS2 in Figur 2 nicht dargestellt ist, könnte dieser in analoger Weise mit dem vierten Prozessor PR4 verbunden werden). Bei dem Sensor SN kann es sich um einen Ortungssensor handeln, der ein beliebiges Funktionsprinzip aufweisen kann. Es könnte ein GPS-Sensor, ein Odometriesensor in Form eines Tachometers oder ein Abstandsradar sein. Durch eine neunte Schnittstelle S9 sind der vierte Prozessor PR4 und die Balisenantenne BA miteinander verbunden.

Ist im Rahmen dieser Erfindungsbeschreibung nur von Computern, Prozessoren, Speichereinheiten oder Schnittstellen die Rede, beziehen sich die Angaben allgemein auf alle der vorstehend im Einzelnen benannten Computer, Prozessoren, Speichereinheiten und weiteren Funktionskomponenten, die verbunden durch die Schnittstellen zur Bildung der Rechenumgebung RU beitragen.

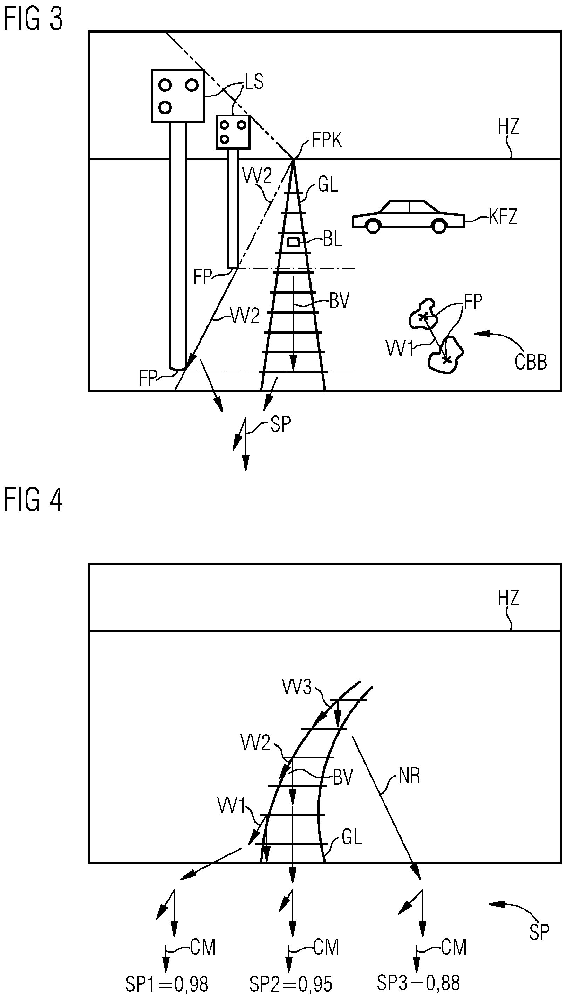

Figur 3 und 4 zeigen beispielhaft jeweils zwei Bilder überlagert, welche der Sensor SN, der in Fahrrichtung blickt, aufgenommen hat. Mit Pfeilen sind Verschiebungsvektoren zwischen Paaren von Featurepunkten FP der beiden Bilder bezeichnet (im Folgenden Feature-Punktpaar). Diese können in dem Bild nur visualisiert werden, da die Featurepunkte FP aus beiden Bildern in einer einzigen Figur dargestellt sind. Zur Durchführung des Verfahrens ist eine derartige Visualisierung selbstverständlich nicht erforderlich. Der Verlauf der Vektoren wird rechnerisch durch Vergleich der betreffenden Bilder berechnet. Senkrecht nach unten ist jeweils der Vektor der Blickachse als Blickachsenvektor dargestellt, um die Bildung der Skalarprodukte SP (in Figur 4 einem ersten Skalarprodukt SP1, einem zweiten Skalarprodukt SP2 und einem dritten Skalarprodukt SP3) zwischen den Verschiebungsvektoren und der Blickachse zeichnerisch zu verdeutlichen.

Der Figur 3 lässt sich ein Bildaufbau entnehmen, bei dem schematisch ein geradesGleis bis zu einem Fluchtpunkt FPK an einem Horizont HZ führt. Dies vereinfacht die Erläuterung des Verfahrens. Wie Figur 4 zu entnehmen ist, sind allerdings auch Verläufe des Gleises GL beispielsweise in einer Kurve unter bestimmten Voraussetzungen dazu geeignet, das Verfahren durchzuführen. An dem Gleis GL stehen verschiedene Objekte, die durch eine Bilderkennung erkannt werden können und an denen Featurepunkte FP festgemacht werden können. Beispielsweise ist ein Lichtsignal LS dargestellt. Auch die Balise BL kann zur Erzeugung von Featurepunkten FP dienen. Ungeeignet ist jedoch ein Kraftfahrzeug KFZ, welches sich ebenfalls bewegen kann und daher falsche Geschwindigkeitsmessungen hervorrufen könnte. Wird dieses im Rahmen einer Objekterkennung erkannt, wird es von einer Bildung von Featurepunkten FP ausgeschlossen.

Unabhängig von einer Objekterkennung können auch charakteristische Bildbereiche CBB bei dem Verfahren Verwendung finden. Diese können beispielsweise durch einen starken Kontrast zu benachbarten Bildbereichen erkannt werden, ohne dass es sich dabei um ein bestimmtes Objekt handeln muss. Diese charakteristischen Bildbereiche CBB "wandern" ebenfalls in den aufeinanderfolgenden Bildern zum Bildrand, so dass diese zur Definition von Featurepunkten FP und, wie in Figur 3 dargestellt ist, eines ersten Verschiebungsvektors VV1 geeignet sind. Ein anderer Featurepunkt FP wird durch den Sockel des Lichtsignals LS gebildet, der zur Erzeugung eines zweiten Verschiebungsvektors VV2 verwendet wird.

Gemäß Figur 4 wird das Bild während der Kurvenfahrt des Fahrzeugs FZ aufgenommen, deswegen ist das Gleis GL in dem Bild gekrümmt. In diesem Beispiel steht der erste Verschiebungsvektor VV1 für ein Feature-Punktpaar, welches in sich entsprechend der Fahrrichtung bewegt hat. Hier ist das Skalarprodukt SP SP1 = 0,99 deutlich größer als ein Schwellwert h = 0,9. Der zweite Verschiebungsvektor VV2 liegt in einer Kurve. Dadurch ist SP2 mit 0,95 kleiner als SP1 aber immer noch größer als der Schwellwert und im akzeptierten Bereich. Zuletzt ist ein fehlerhafter dritter Verschiebungsvektor VV3 im weiteren und damit entfernteren Verlauf der Kurve skizziert. Hier ist SP3 mit 0,88 kleiner als der Schwellwert h und deshalb wird dieses Feature-Punktpaar verworfen.

Im Folgenden soll das erfindungsgemäße Verfahren beispielhaft, wie im Flussdiagramm gemäß Figur 3 dargestellt, schrittweise erläutert werden. In Figur 3 ist außerdem beispielhaft durch Kästen angedeutet, in welchen Funktionskomponenten und Recheninstanzen gemäß Figur 1 und 2 die einzelnen Schritte durchgeführt werden können. Rechnergestützte Schritte erfolgen in den nicht näher dargestellten Prozessoren. Das Auslesen und Speichern von Daten in die Speichereinheiten ist beispielhaft dargestellt. Soweit hierbei die Schnittstellen gemäß Figur 1 und 2 genutzt werden, sind diese auch in Figur 3 gekennzeichnet.

In einem ersten Schritt 1 erfolgt der Start des Verfahrens (kurz: START).

In einem zweiten Schritt 2 erfolgt die Aufnahme von Bildern (kurz: GN-PCT). die Bilder werden vorzugsweise in Fahrtrichtung FR von dem vor dem fahrenden Fahrzeug FZ liegenden Streckenabschnitt aufgenommen. Es entsteht eine Abfolge von Bildern, alles, sodass aus dieser zwei aufeinanderfolgende Bilder ausgewählt werden können. Diese müssen nicht notwendigerweise direkt hintereinander in der Folge liegen. Es können auch Bilder ausgelassen werden.

In einem dritten Schritt 3 erfolgt die Analyse der Bilder (kurz: ANA-PCT). hierfür müssen wenigstens zwei aufeinanderfolgende Bilder zur Verfügung stehen, in denen dasselbe Objekt oder derselbe charakteristische Bildbereich CBB erkannt werden kann. Durch Erkennung dieser Bildelemente lassen sich Featurepunkte FP definieren.

In einem vierten Schritt 4 erfolgt die Erzeugung von Verschiebungsvektoren auf Grundlage der Erkennung der Featurepunkte FP in den aufeinanderfolgenden Bildern (kurz: GN-VV). Die Verschiebungsvektoren verlaufen von einem Inneren des Bildes zum äußeren Rand, wenn die Bildachse (genau genommen des zugehörigen Bildachsenvektors BV) in Fahrtrichtung FR gewählt wurde. In einem fünften Schritt 5 erfolgt auch die Analyse der Bildachse, um einen Bildachsenvektor BV zu bestimmen (kurz: GN-BV).

In einem sechsten Schritt 6 erfolgt dann die Berechnung des Skalaprodukt es aus den vorher berechneten Vektoren, nämlich dem Verschiebungsvektor und dem Bildachsenvektor BV (kurz: CAL-SP). hiervon hängt es ab, ob der berechnete Verschiebungsvektor für eine Geschwindigkeitsberechnung herangezogen wird unter nicht. In einem siebenten Schritt 7 erfolgt erfolgt nämlich die Abfrage, ob das Skalarprodukt SP größer als ein vorgegebener Schwellwert von beispielsweise 0,9 ist (kurz: SP>h?). nur wenn dies der Fall ist, geht es weiter mit dem Schritt acht. Ansonsten erfolgt eine Rekursion zur Wiederholung des Schrittes 3.

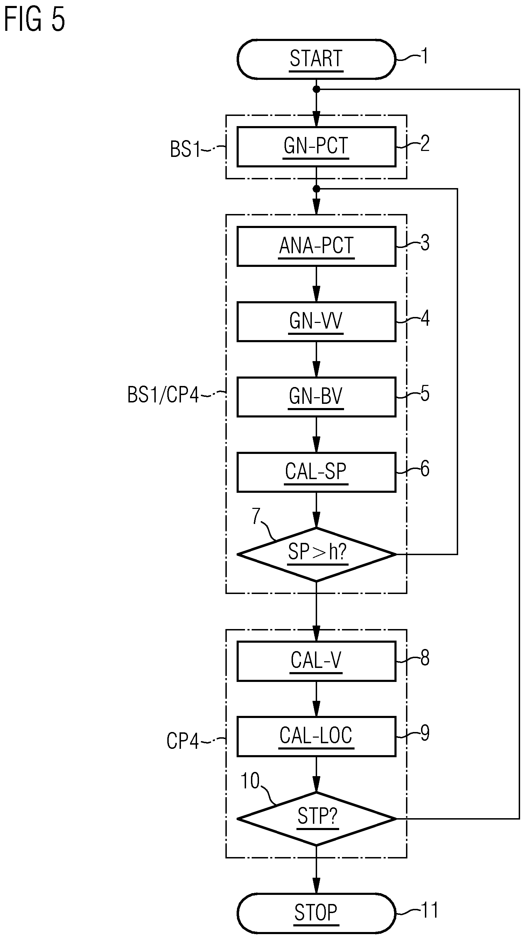

In einem achten Schritt 8 erfolgt die Berechnung der Geschwindigkeit des Fahrzeugs FZ (kurz: CAL-V). Diese kann anschließend für eine Lokalisierung des Fahrzeugs FZ herangezogen werden. Ebenso können andere Steuerungsaufgaben übernommen werden (in Figur 5 nicht dargestellt) In einem neunten Schritt 9 erfolgt die Berechnung der Position des Fahrzeugs FZ (kurz: CAL-LOC). Hierbei handelt es sich um eine relative Ortung ausgehend von dem letzten sicher bekannten absoluten Ortungspunkt des Fahrzeugs FZ. Die relative Ortung wird zumindest so lange fortgeführt, bis wieder eine absolute Ortung mit einer vergleichsweise höheren Genauigkeit möglich ist.

In einem zehnten Schritt 10 erfolgt eine Abfrage, ob das Verfahren gestoppt werden soll.(kurz: STP?). Dies ist, wie erwähnt, der Fall, wenn eine absolute Ortung mit hoher Genauigkeit vorliegt. In diesem Fall wird in einem elften Schritt 11 das Verfahren gestoppt (kurz STOP). Wenn weitere relative Lokalisierungswerte erzeugt werden sollen, erfolgt eine Rekursion zum zweiten Schritt 2.

### Bezugszeichenliste

- AT: Antenne
- BA: Balisenantenne
- BAC: Bildachse
- BL: Balise
- BS1: erster Bildsensor
- BS2: zweiter Bildsensor
- BU: Bahnumgebung
- BV: Bildachsenvektor
- CBB: charakteristischer Bildbereich
- CLD: Cloud
- CP1: erster Computer
- CP2: zweiter Computer
- CP3: dritter Computer
- CP4: vierter Computer
- DL: Dienstleister
- FP: Featurepunkt
- FPK: Fluchtpunkt
- FR: Fahrtrichtung
- FZ: Fahrzeug
- GL: Gleis
- HZ: Horizont
- KFZ: Kraftfahrzeug
- LS: Lichtsignal
- LZ: Leitzentrale
- PR1: erster Prozessor
- PR2: zweiter Prozessor
- PR3: dritter Prozessor
- PR4: vierter Prozessor
- PR5: fünfter Prozessor
- RT1: erste Routine
- RT2: zweite Routine
- RT3: dritte Routine
- RU: Rechenumgebung
- S1: erste Schnittstelle
- S11: elfte Schnittstelle
- S12: zwölfte Schnittstelle
- S13: 13. Schnittstelle
- S14: 14. Schnittstelle
- S15: 15. Schnittstelle
- S2: zweite Schnittstelle
- S3: dritte Schnittstelle
- S4: vierte Schnittstelle
- S5: fünfte Schnittstelle
- S6: sechste Schnittstelle
- S7: siebente Schnittstelle
- S8: achte Schnittstelle
- S9: neunte Schnittstelle
- SE1: erste Speichereinheit
- SE2: zweite Speichereinheit
- SE3: dritte Speichereinheit
- SE4: vierte Speichereinheit
- SE5: fünfte Speichereinheit
- SN: Sensor
- SP: Skalarprodukt
- SP1: ersten Skalarprodukt
- SP2: zweiten Skalarprodukt
- SP3: dritten Skalarprodukt
- STW: Stellwerk
- VV1: erster Verschiebungsvektor
- VV2: zweiter Verschiebungsvektor
- VV3: dritter Verschiebungsvektor

## Patentansprüche

1. Verfahren zur Geschwindigkeitsbestimmung eines auf einer Strecke fahrenden spurgeführten Fahrzeugs (FZ) bei dem
a)
eine Folge von Bildern der Strecke und ihrer Umgebung durch einen bildgebenden Sensor (SN) erfasst und gespeichert wird,
b)
jeweilige Erfassungszeitpunkte der Bilder derart gespeichert werden, dass diese den jeweiligen Bildern zugeordnet sind,
c)
in den Bildern charakteristische Bildbereiche (CBB) erkannt werden,
**dadurch gekennzeichnet, dass**
d)
eine Anzahl von gespeicherten Bildern ausgewählt wird,
e)
eine perspektivische Verschiebung mindestens eines charakteristischen Bildbereiches (CBB) in den Bildern der ausgewählten Anzahl, die aufgrund der Bewegung des Fahrzeugs (FZ) entsteht, ermittelt wird,
f)
die perspektivische Verschiebung unter Berücksichtigung der Erfassungszeitpunkte der Bilder der ausgewählten Anzahl in eine Geschwindigkeit umgerechnet wird.

2. Verfahren nach Anspruch 1, **dadurch gekennzeichnet, dass** das Fahrzeug (FZ) unter Berücksichtigung der Geschwindigkeit ausgehend von einem zu einem bekannten Zeitpunkt bekannten Ort des Fahrzeugs (FZ) relativ geortet wird.

3. Verfahren nach Anspruch 1 oder 2, **dadurch gekennzeichnet, dass** der Sensor (SN) mit einer Erfassungrichtung zumindest im Wesentlichen in Fahrtrichtung (FR) ausgerichtet ist.

4. Verfahren nach einem der vorhergehenden Ansprüche,Bildachsenvektor (BV) nnzeichnet, dass eine Auswahl eines charakteristischen Bildbereichs (CBB) auf einen in den Bildern in einem jeweiligen Bildausschnitt dargestellten Gleisbereich (GL) beschränkt wird.

5. Verfahren nach Anspruch 4, **dadurch gekennzeichnet, dass** zur Bestimmung des Bildausschnitts eine Objekterkennung für Elemente des Gleisbereiches (GL) durchgeführt wird.

6. Verfahren nach einem der vorhergehenden Ansprüche, **dadurch gekennzeichnet, dass** zur Beurteilung der perspektivischen Verschiebung Verschiebungsvektoren des charakteristischen Bildbereiches (CBB) in jeweils aufeinanderfolgenden Bildern bestimmt werden.

7. Verfahren nach Anspruch 6, **dadurch gekennzeichnet, dass** die Eignung der Verschiebungsvektoren zur Geschwindigkeitsermittlung überprüft wird, indem das Skalarprodukt (SP) aus dem betreffenden Verschiebungsvektor und einem Bildachsenvektor (BV) berechnet wird.

8. Verfahren nach Anspruch 7, **dadurch gekennzeichnet, dass** der Verschiebungsvektor und die Bildachsenvektor (BV) normiert werden, bevor das Skalarprodukt (SP) berechnet wird.

9. Verfahren nach einem der vorhergehenden Ansprüche, **dadurch gekennzeichnet, dass** ein Verschiebungsvektor nur dann für eine Geschwindigkeitsbestimmung verwendet wird, wenn eine rechnergestützte Prüfung ergibt, dass das Skalarprodukt (SP) oberhalb eines vorgegebenen Schwellenwertes oder mindestens auf dem vorgegebenen Schwellenwert liegt.

10. Fahrzeug mit einer Einrichtung zur Geschwindigkeitsbestimmung aufweisend einen Sensor (SN) und eine Recheninstanz **dadurch gekennzeichnet, dass**
g)
der Sensor (SN) als bildgebender Sensor (SN) ausgestaltet ist und eingerichtet ist, zumindest den Verfahrensschritt a) gemäß einem der voranstehenden Ansprüche durchzuführen,
h)
die mindestens eine Recheninstanz Teil einer Rechenumgebung (RU) ist, wobei die Rechenumgebung (RU) eingerichtet ist, zumindest die Verfahrensschritte b), c), d), e), und f) gemäß einem der voranstehenden Ansprüche durchzuführen.

11. Computerprogrammprodukt, enthaltend Programmbefehle, die durch eine Rechenumgebung (RU) ausführbar sind, derart, dass zumindest die Schritte b), c), d), e), und f) des Verfahrens nach einem der Ansprüche 1 - 9 ausgeführt wird.

12. Computerlesbares Speichermedium, enthaltend Daten, welche als Datensätze vom Speichermedium gespeichert werden, derart, dass die Datensätze das Computerprogrammprodukt nach dem letzten voranstehenden Anspruch ausführbar machen.
